# EUROPEAN PATENT APPLICATION

(11) **EP 2 746 912 A1**
(43) Date of publication of application: **25.06.2014**
(21) Application number: 12862902.9
(22) Date of filing: 31.12.2012
(51) Int. Cl.: G06F 3/048

(54) **METHOD AND SYSTEM FOR GENERATING CONTROL INSTRUCTION ACCORDING TO CHANGE OF GLYPH OUTLINE**

(30) Priority: 30.12.2011 CN 201110457048
(71) Applicant: Peking University Founder Group Co., Ltd, Haidian District Beijing 100871 (CN); Beijing Founder Electronics Co., Ltd., Haidian District, Beijing 100085 (CN)
(72) Inventor: MA, Lei, - (CN); LIU, Fang, - (CN); XIA, Lining, - (CN); WANG, Yuxin, - (CN)
(74) Representative: Cohausz & Florack
(86) International application number: PCT/CN2012/088065
(87) International publication number: WO 2013/097817

(57) **Abstract**

The present invention relates to the technical field of computer character input, and provides a method and system for generating instructions according to the change of a font outline. The method comprises: reading original data of a font outline; modifying the font outline; generating instructions according to the change of the font outline data; and importing the instructions into a character library.

## Description

### TECHNICAL FIELD

The present invention relates to the field of computer character input technology, and more particularly relates to a method and system for generating instructions according to the change of a font outline.

### BACKGROUND ART

TrueType is a new technology of math font description developed by Apple Computer Corporation and Microsoft Corporation jointly. In large font sizes, the character library of TrueType can be displayed well. However, in small font sizes, like those common font sizes such as small 4-size (12-point type) and 5-size (10.5-point type) in Word, some relatively complicated strokes may be overlapped.

There are two solutions to the problem. One is embedded bitmap and the other is adding instructions. The embedded bitmap was a technology popularly used before the instruction appeared. For example, the Song Typeface font library provided in Windows XP solves the problem of bad display effect in small font sizes with the embedded bitmap. However, this technology requires bitmap data of each small font size to be provided, resulting that the data amount is large. Presently, the most ideal method to solve the problem of bad display effect in small font sizes is adding instructions to the character library, such as the Microsoft Yahei font library provided in Windows 7.

Presently common tools of adding instructions, such as FontLab, need to set the direction that the instruction affects, and each operation corresponds to each instruction. The method involves too many times of operations. The more times of operations there are, the longer the length of the instructions will be. A character library includes thousands of characters (i.e. letters, numbers, symbols or words), so it requires months of hard work for a plurality of designers to add the instructions to a character library. The too many unnecessary operations will prolong the time of adding the instructions. Moreover, it needs repeated adjustments to achieve satisfied effect for complicated characters. Thus, the character library may become oversized due to overlong instructions through too many times of operations.

### Summary of the Invention

With respect to the defects in the prior art, the present invention provides a method and system for generating instructions according to the change of a font outline, which can simplify the operation of adding instructions in the character library and reduce the size of the instructions data.

To solve the above technical problems, the present invention is achieved by the following technical solutions:
A method for generating instructions according to the change of a font outline, includes the following steps:
   (1) reading the original data of a font outline;
   (2) modifying the font outline;
   (3) generating instructions according to the change of the font outline data;
   (4) importing the instructions into a character library.

Preferably, in the method for generating instructions according to the change of a font outline, the original data of the font outline in step (1) include the number of the outline curves composing the character, and the number, coordinates and attributes of the points corresponding to each outline curve.

Preferably, in the method for generating instructions according to the change of a font outline, modifying the font outline in step (2) is achieved by modifying the coordinates of the points corresponding to the outline curves composing the character.

Preferably, in the method for generating instructions according to the change of a font outline, generating instructions in step (3) includes the following steps:
① reading the original data of the font outline and the modified data of the font outline;
② calculating the change of the font outline data according to the original data of the font outline and the modified data of the font outline;
③ generating the instructions corresponding to the change of the font outline data.

Preferably, in the method for generating instructions according to the change of a font outline, the specific calculation of the change of the font outline data in step ②is: calculating the change values of X coordinate and Y coordination of each point corresponding to the outline curves composing the character.

Preferably, in the method for generating instructions according to the change of a font outline, the specific calculations of generating the corresponding instructions in step ③ are:
firstly, generating instructions for setting font size, setting distance measuring direction and setting point movement direction respectively;
secondly, according to the change of the font outlines, generating a point movement instructions, a point alignment instructions or a instruction of moving the point to the intersection point of straight lines; wherein, the direction is X direction or Y direction.

Preferably, in the method for generating instructions according to the change of a font outline, the specific calculations of the point movement instruction, point alignment instruction and the instruction of moving the point to the intersection point of straight lines are as follows:
when the point corresponding to the outline curve moves in X or Y direction, pushing the serial number of the point onto a stack, pushing the movement value of the point onto the stack and inputting the movement instruction ;
when the coordinate values of two points corresponding to the outline curve in X or Y direction become the same value, setting one point as a reference point and pushing the serial number of the other point onto the stack and inputting the point alignment instruction;
when the point corresponding to the outline curve needs to be moved to the intersection of two straight lines, pushing the serial number of the point onto the stack, pushing the serial numbers of the start points and the end points of two straight lines respectively onto the stack and inputting the instruction of moving the point to the intersection point of straight lines.

Preferably, in the method for generating instructions according to the change of a font outline, after generating the instructions, step ① also includes the procedures of classifications, combination and optimization of the instructions.

Preferably, in the method for generating instructions according to the change of a font outline, the classification of the instructions includes classifying the instructions according to movement direction and type:
the classification and the combination according to movement direction indicates that all the instructions of the same movement direction of the points are operated collectively, and the movement direction is set only once;
the classification and the combination according to type indicates that all the instructions of the same movement value of points are operated circularly, and all the points of aligning points with the same point are operated circularly; the movement value of the points and the reference point are not set repeatedly.

Preferably, in the method for generating instructions according to the change of a font outline, the optimization indicates that the instruction with smaller length is selected preferably when the instructions of different types can be available.

A system for generating instructions according to the change of a font outline, comprises:
a reading device for reading original data of a font outline;
a modifying device for modifying the font outline;
a generating device for generating instructions according to the change of the font outline data;
an importing device for importing the instructions into a character library.

According to the method and system of the present invention, the font outline can be directly modified, the modification of the font outline is separated from the generation of the instructions, the instructions is automatically generated according to the change of the font outline data, and the instructions are classified, combined and optimized when being generated, thereby the operation is simplified, the length of the instructions is reduced, the efficiency of adding the instructions is improved, and the problem that the character library becomes oversized due to an excessively large amount of the instructions data can be overcome.

### BRIEF DESCRIPTION OF THE DRAWINGS

Figure 1 is a structural view of a system for generating instructions based on the change of a font outline according to a specific embodiment.
Figure 2 is a flowchart of a method for generating instructions based on the change of a font outline according to a specific embodiment.
Figure 3 is a schematic diagram of outline curve and bitmap of the character " 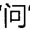 " before adding the instructions according to an specific embodiment.
Figure 4 is a schematic diagram of outline curve and bitmap of the character " 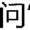 " after adding the instructions according to an specific embodiment.
Figure 5 is a flowchart of a method for generating instructions according to a specific embodiment.

### DETAILED DESCRIPTION OF THE PREFERRED EMBODIMENTS

Hereinafter, embodiments of the present invention will be described in detail in conjunction with the accompanying drawings.

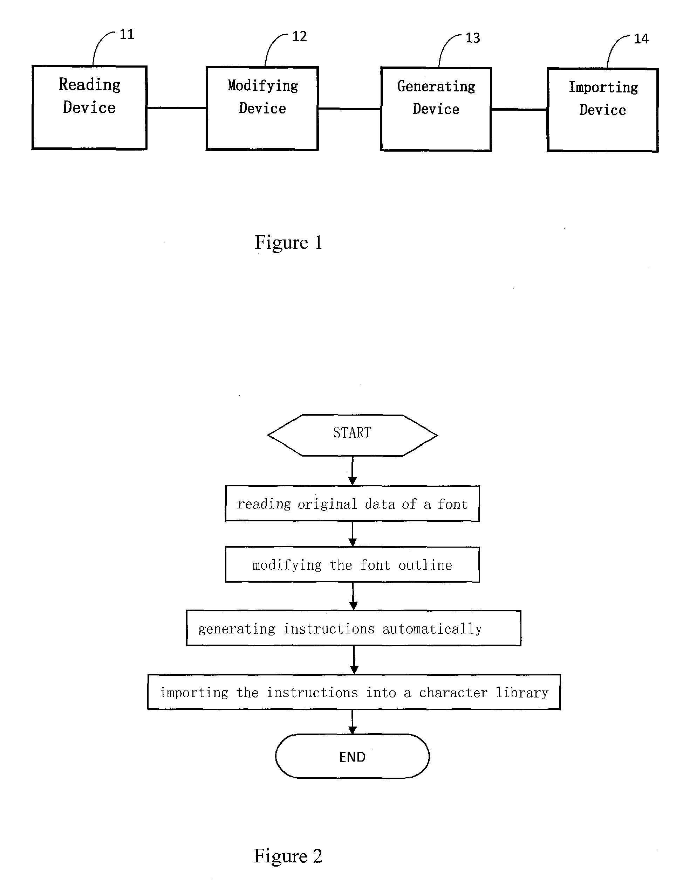

As illustrated in Fig.1, a system for generating instructions according to the change of a font outline includes: a reading device 11; a modifying device 12; a generating device 13; and an importing device 14.

The reading device 11 is used for reading original data of a font outline, and sending the original data of the font outline to the modifying device 12 and the generating device 13 respectively. The modifying device 12 is used for modifying the font outline, and sending the modified data of the font outline to the generating device 13; wherein, the modifying device 12 can modify the font outline by manual operation, or the modification may be performed automatically by programming languages. For example, the font outlines of the same strokes in some characters are modified in the same manner; or the font outlines may be modified using a combination of manual operation and programming languages. The generating device 13 is used for obtaining the change of the font outline data, according to the original data of the font outline sent from the reading device 11 and the modified data of the font outline sent from the modifying device 12; generating the instructions according to the change of the font outline data; and sending the generated instructions to the importing device 14. The importing device 14 is used for importing the instructions sent from the generating device 13 into a character library.

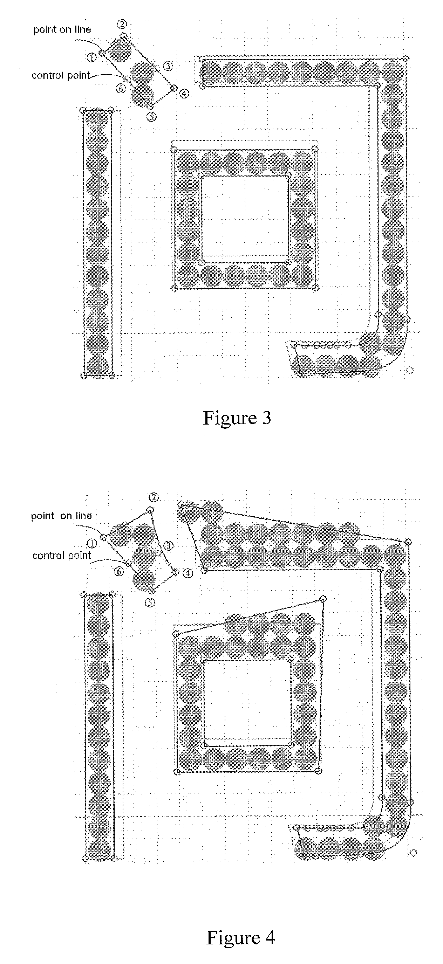

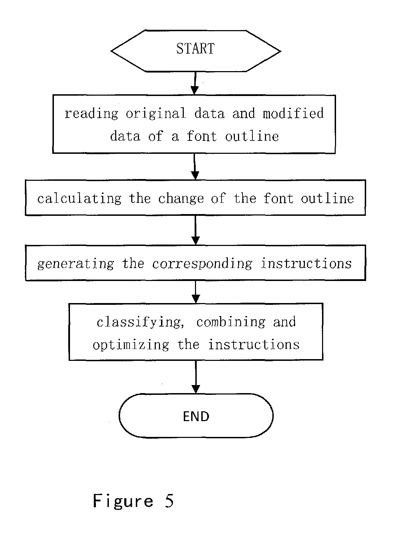

As illustrated in Fig.2, for all character libraries of the TrueType, with the system as illustrated in Fig.1, the method for generating instructions according to the change of the font outline is achieved by following steps:
(1) The reading device 11 reads original data of a font outline
   The original data of a font outline include the number of the outline curves composing characters (the outline curves are quadratic curves or straight lines, and each outline curve indicates the line between two adjacent points on line; for example, there are four outline curves composing "'" in the top left corner of character " 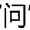 " as illustrated in Fig. 3), the number of the points corresponding to each outline curve (the points include the points on line and control points; the points on line are located at the start or the end of each outline curve, that is to say, they are the start points or end points of each outline curve. The control points are used for controlling the shape of each outline curve. When the outline curve is a quadratic curve, the outline curve corresponds to one control point and two points on line; when the outline curve is a straight line, the outline curve corresponds to only two points on line. Two connected outline curves correspond to three points on line, that is to say, as a shared point on line of two connected outline curves, the point on line corresponds to two outline curves respectively. If two outline curves are connected, it means that the start point or the end point of one outline curve coincides with the start point or the end point of another outline curve so that the coinciding point on line is regarded as the shared point on line of two outline curves, instead of the case that two outline curves intersect. For example, there are six points corresponding to the outline curves composing "'" in the top left corner of character " 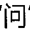 " as illustrated in Fig. 3, including four points on line and two control points), the coordinates of the points (A two-dimensional coordinate system for each character to which the instructions are to be added in the character library is established. The abscissa axis thereof is the X axis and the ordinate axis thereof is the Y axis; thus, each of the points corresponding to respective the outline curves composing the character has an unique coordinate in the coordinate system), and the attribute of the points (for example, the attribute of a point can be whether the point is on the outline curve. If yes, the point is a point on line; otherwise, the point is a control point; for another example, the attribute of a point can be a serial number of the point, wherein a serial number is assigned to each point in order to differentiate the points corresponding to all outline curves composing the character from one another and for easy operation thereof, and the serial numbers are normally arranged clockwise or anticlockwise along the outline curves. For instance, the six points corresponding to the "'" in the top left corner of character " 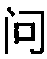 " are arranged clockwise, whose serial numbers are ①-⑥ respectively. Among them, the points with serial numbers ①, ②, ④ and ⑤ are points on line; and the points with serial numbers ③ and ⑥ are control points. For still another example, when a point is a point on line, the attribute of the point can be whether it is the start point or end point of the corresponding outline curve).
(2) The modifying device 12 modify the font outline
   Modifying the font outline can be achieved by modifying the coordinates of the points in the original data of the font outline, that is, modifying the font outline is performed by modifying the coordinates of the points corresponding to the outline curves composing the characters. For example, the original coordinate of one point is (0, 0) and the modified coordinate is (5, 10). The modifying of the shape of outline curves corresponding to the point is achieved by moving the point, so that the font outline of the character composed by the outline curves is modified.
(3) The generating device 13 generates instructions according to the change of the font outline data. As illustrated in Fig.5, it includes following steps:
   ① reading the original data of the font outline and the modified data of the font outline;
   ② calculating the change of the font outline data according to the original data of the font outline and the modified data of the font outline.
      The specific calculation procedure is calculating the change values of X coordinate and Y coordinate of each point. For example, if the original coordinate of one point is (0, 0) and the modified coordinate of the point is (5, 10), the change of the point will be: adding 5 in X direction and adding 10 in Y direction. The number of the outline curves composing the character, the number of the points corresponding to each outline curve and the attribute of the points will not change.
   ③ generating the instructions corresponding to the change of the font outline data For example, for those points whose X coordinates become the same value, a point alignment instruction in X direction can be added. For the points whose X coordinates have the same added or reduced value, the point moving instruction in X direction can be added.
      The instruction set of TrueType is an instruction system independent of coordinate data, including instructions for computer such as the stack operation, storage operation, pointer operation, logical sentences, arithmetic calculations, jumps and loops.
      The steps of automatically generating instructions are as follows (all the instructions generated automatically are subordinate to the instruction set of TrueType):
      Firstly, generating instructions of setting font size (there may exist different problems in the font outlines for the same character in different font sizes , thus different instructions may be added and font size should be set), setting distance measuring direction and setting point movement direction respectively. The distance measuring direction and the point movement direction can be set by those of skill in the art depending on practical conditions. For example, the distance measuring direction and the point movement direction can be set as X direction or Y direction respectively; or along the directions of pre-set straight lines. As illustrated in Figs. 3 and 4, if the point on line whose serial number is ② needs to be moved from the location as illustrated in Fig. 3 to the location as illustrated in Fig. 4, it can be moved firstly in X direction and then in Y direction, or firstly in Y direction and then in X direction; otherwise, it can be moved along the direction of a straight line formed between the location of the point with serial number ② before moving and the location of the point with serial number ② after moving, that is to say, it can be moved from the location as illustrated in Fig. 3 directly to the location as illustrated in Fig. 4 along the direction of the straight line.
      Secondly, according to the change of the font outline, instructions such as the point movement instruction, the point alignment instructions and the instruction of moving the point to the intersection point of straight lines are generated.

      The specific calculation procedures of the point movement instructions, the point alignment instructions and the instructions of moving the point to the intersection point of straight lines are as follows:
      when the point corresponding to the outline curve moves in X or Y direction, pushing the serial number of the point onto a stack, pushing the movement value of the point onto the stack and inputting the point movement instruction;
      when the coordinate values of two points corresponding to the outline curve in X or Y direction become the same value, setting one point as the reference point and pushing the serial number of the other point onto a stack and inputting the point alignment instruction;
      when the point corresponding to the outline curve needs to be moved to the intersection point of two straight lines, pushing the serial number of the point onto a stack, pushing the serial numbers of start points and end points of two straight lines separately onto the stack respectively and inputting the instruction of moving the point to the intersection point of the straight lines.

      One embodiment will be described in detail, supposing a point, whose font size is 14 and serial number is 4, moves 10 in X direction.
      Before adding the instructions, the unit conversion of values should be performed firstly.
      The actual movement value of the point: px=10 × 64/wstep;
      where wstep is the value of one pixel unit corresponding to the coordinate unit on the screen.
      Supposing wstep=20, then px=32.
      Firstly, while setting the instructions in font size 14, the following are performed:
      MPPEM[]
      PUSHB[]
      14
      ......
      EQ[]
      IF[]
      EIF[]

      Further, the instructions to be executed is added to the part of "...".
      The following are instructions replacing "...":
      Firstly, the distance measuring direction and the point moving direction are set: SVTCA[1]

      Further, the serial number 4 of the point is pushed onto the stack:
      PUSHB[]
      4

      Further, the movement value 32 of the point is pushed onto the stack:
      PUSHB[]
      32

      Finally, the point movement instruction is input:
      SHPIX[]

      In other situations, the processes of generating instructions automatically are similar to above.
      In above embodiment, the instruction is indicated by the name of instruction. In character libraries, the instructions are all two-bit hexadecimal values. For example, the actual value of SVTCA[1] is 0X01.
   ④classifying the instructions according to movement direction and type; combining the instructions of the same type; executing loop over the instructions with the same function; and optimizing the sequence of the instructions which can be replaced with shorter instructions.

   If each point having changes in coordinate is operated according to step ③, the instructions of the same type or the same function will be input repeatedly, resulting in an overlong length of the instructions. In order to simplify the instructions, the instructions can be classified according to movement direction and type. The instructions of the same type can be combined; and the instructions of the same function can be executed in loops.
   The classification according to movement direction and the combination of the instructions of the same type (such as all the instructions of the same point movement direction) indicate that all the instructions of the same point movement direction are executed collectively, and the movement direction is set only once; wherein, the movement direction of the points can be set as X direction or Y direction. For example, after the movement direction is set as X direction, all the instructions in X direction are executed; then the movement direction is set as Y direction, and all the instructions in Y direction are executed.
   By classification and combination according to type, the instructions can be generally divided into the instructions of the same function (such as all the instructions of same movement value of the points, and all the instructions of aligning the points with the same point) and instructions of different functions, that is to say, all the instructions of the same movement value of the points are executed circularly; in addition, all the instructions of aligning the points with the same point are executed circularly; and the movement value of the points and the reference point are not set repeatedly. In other words, the instructions of the same function can be executed circularly.
   The optimization indicates that the instruction with relatively short length is selected preferably when the instructions of different types can be executed. For example, the effect of a point moving to the intersection point of straight lines can also be obtained by moving the point along X direction and Y direction separately. However, comparatively, the instruction of moving the point to the intersection point of straight lines is shorter. In this situation, instead of the point moving instruction, the instruction of moving the point to the intersection point of straight lines is used.
   One embodiment of executing circularly all the instructions with the same point movement value will be described as follows:
   In the following, assuming that three points with serial numbers 4, 5 and 6 will move 10 in X direction; wherein, the settings of font size, distance measuring direction and movement direction of the points are referred to step ③, which are omitted herein. Supposing the actual movement value of the point is 32 after the conversion.

   Push the serial numbers of the points to be moved onto the stack:
   PUSHB[]
   456

   Push the number of the points to be moved onto the stack:
   PUSHB[]
   3

   Set the looping times:
   SLOOP[]

   Push the movement value 32 of the points onto the stack:
   PUSHB[]
   32

   Input the point movement instruction:
   SHPIX[]

   It can be seen that for points with the same movement value, they can only be moved in order; that is to say, the points whose serial numbers are 4, 5 and 6 are moved by 10 in X direction in order; in other words, for points with the same movement value, the movement instructions can not be completed in one operation; instead, they must be executed circularly.
(4) The importing device 14 imports the instructions into a character library.

By executing the instructions, the modified font outline is generated. Thus, the font outline of the character " 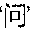 " as illustrated in Fig. 3 becomes the font outline shown in Fig. 4 after adding the instructions.

Obviously, person skilled in the art can make various modifications and variations without departing from the spirit and the scope of the invention. The present invention is intended to include these modifications and variations if these modifications and variations belong to the scope of the claims and their equivalents.

## Claims

1. A method for generating instructions according to the change of a font outline, **characterized by** including the following steps:
(1) reading original data of the font outline;
(2) modifying the font outline;
(3) generating instructions according to the change of the font outline data;
(4) importing the instructions into a character library.

2. The method for generating instructions according to the change of a font outline according to claim 1, **characterized in that**, the original data of the font outline in step (1) include the number of the outline curves composing a character, and the number, coordinates and attributes of the points corresponding to each outline curve.

3. The method for generating instructions according to the change of a font outline according to claim 2, **characterized in that**, modifying the font outline in step (2) is achieved by modifying the coordinates of the points corresponding to the outline curves composing the character.

4. The method for generating instructions according to the change of a font outline according to any one of claims 1-3, **characterized in that**, generating instructions in step (3) includes following steps:
① reading original data of the font outline and modified data of the font outline;
② calculating the change of the font outline data according to the original data of the font outline and the modified data of the font outline;
③ generating the instructions corresponding to the change of the font outline data.

5. The method for generating instructions according to the change of a font outline according to claim 4, **characterized in that**, the specific calculation of the change of the font outline in step ② is: calculating the change values of X coordinate and Y coordination of each point corresponding to the outline curves composing the character.

6. The method for generating instructions according to the change of a font outline according to claim 4, **characterized in that**, the specific calculations of generating the corresponding instructions in step ③ are:
firstly, generating instructions for setting font size, setting distance measuring direction and setting point movement direction respectively;
secondly, according to the change of the font outline, generating a point movement instruction, a point alignment instruction or a instruction of moving the point to the intersection point of straight lines.

7. The method for generating instructions according to the change of a font outline according to claim 6, **characterized in that**, the specific calculations of the point movement instruction, point alignment instruction and the instruction of moving the point to the intersection point of straight lines are as follows:
when the point corresponding to the outline curve moves in X or Y direction, pushing the serial number of the point onto a stack, pushing the movement value of the point onto the stack and inputting the point movement instruction;
when the coordinate values of two points corresponding to the outline curve in X or Y direction become the same value, setting one point as a reference point and pushing the serial number of the other point onto a stack and inputting the point alignment instruction; and
when the point corresponding to the outline curve needs to be moved to the intersection of two straight lines, pushing the serial number of the point onto a stack, pushing the serial numbers of the start points and the end points of two straight lines respectively onto the stack and inputting the instruction of moving the point to the intersection point of straight lines.

8. The method for generating instructions according to the change of a font outline according to claim 7, **characterized in that**, after generating the instructions, step ③ also includes the procedures of classification, combination and optimization of the instructions.

9. The method for generating instructions according to the change of a font outline according to claim 8, **characterized in that**, the classification of the instructions includes classifying the instructions according to movement direction and type:
the classification and combination according to movement direction indicates that all the instructions of the same point movement direction are operated collectively, and the movement direction is set only once;
the classification and combination according to type indicates that all the instructions of the same movement value of the points are operated circularly; and all the instructions of aligning points with the same point are operated circularly; the movement value of the points and the reference point are not set repeatedly.

10. The method for generating instructions according to the change of a font outline according to claim 8, **characterized in that**, the optimization indicates that the instruction with smaller length is selected preferably when the instructions of different types can be available.

11. A system for generating instructions according to the change of a font outline, **characterized by** comprising:
a reading device for reading original data of the font outline (11);
a modifying device for modifying the font outline (12);
a generating device for generating instructions according to the change of the font outline data (13);
an importing device for importing the instructions into a character library (14).
